(19) Europäisches Patentamt
European Patent Office
Office européen des brevets

(11) **EP 1 518 067 B1**

(12) **FASCICULE DE BREVET EUROPEEN**

(45) Date de publication et mention de la délivrance du brevet:
**08.05.2019 Bulletin 2019/19**

(21) Numéro de dépôt: **03761623.2**

(22) Date de dépôt: **18.06.2003**

(51) Int Cl.:
***F16K 31/56*** *(2006.01)*

(86) Numéro de dépôt international:
**PCT/FR2003/001870**

(87) Numéro de publication internationale:
**WO 2004/003415 (08.01.2004 Gazette 2004/02)**

(54) **CLAPET A MEMBRANE BI-STABLE**

BISTABILES MEMBRANVENTIL

BISTABLE MEMBRANE VALVE

(84) Etats contractants désignés:
**AT BE BG CH CY CZ DE DK EE ES FI FR GB GR HU IE IT LI LU MC NL PT RO SE SI SK TR**

(30) Priorité: **28.06.2002 FR 0208064**

(43) Date de publication de la demande:
**30.03.2005 Bulletin 2005/13**

(73) Titulaire: **NEXTER Mechanics**
**78000 Versailles (FR)**

(72) Inventeurs:
• **ADRION, David**
**42120 Le Coteau (FR)**
• **MAQUAIRE, Michel**
**45160 Ardon (FR)**

(74) Mandataire: **Célanie, Christian**
**Cabinet Célanie**
**5 Avenue de Saint Cloud**
**B.P. 214**
**78002 Versailles Cedex (FR)**

(56) Documents cités:
| | |
|---|---|
| EP-A- 0 294 194 | WO-A-98/32412 |
| BE-A- 360 597 | DE-A- 4 325 283 |
| US-A- 2 585 863 | US-A- 3 633 605 |
| US-A- 3 845 777 | US-B1- 6 345 649 |

**Description**

Le secteur technique de la présente invention est celui des clapets et vise plus particulièrement l'utilisation de ces clapets dans les vannes de gonflage et de dégonflage du pneumatique d'une roue d'un véhicule automobile.

On connaît, notamment par les brevets FR 87-07772, FR 90-12858 et FR 95-03299, le principe des vannes permettant le gonflage, et le dégonflage des pneus de véhicules par commande à distance.

La technique mise en oeuvre lors de l'utilisation de ces vannes est celle de clapets capables, dans une position de laisser passer de l'air sous pression vers le pneumatique, dans une autre position de laisser s'échapper l'air contenu dans le pneumatique vers l'extérieur, et dans une position de repos d'isoler le pneumatique en fermant le circuit de circulation d'air.

Pour arriver à ce fonctionnement, on utilise une membrane soumise à un ressort et couplée à un clapet constitué d'une chambre et d'un moyen de fermeture. Le moyen de fermeture actuellement utilisé étant une bille. Ce système a montré de réelles performances sur les véhicules lourds. Une membrane bi-stable est décrite dans le brevet US. 6345 649 B1.

L'inconvénient de ce système réside dans le fait que, appliqué aux véhicules légers, la pression interne du pneumatique est beaucoup plus faible que pour les véhicules lourds alors que la vitesse de rotation des roues est nettement plus importante. Ces différents facteurs engendrent des dysfonctionnements de la vanne, essentiellement dus aux forces centrifuges appliquées sur la bille ou aux accélérations verticales que peuvent subir les roues d'un véhicule

L'objet de la présente invention est donc de remédier à ces problèmes en proposant un clapet qui assurera le même rôle dans les vannes de gonflage/dégonflage mais dont les coûts d'obtention seront réduits et dont les éléments resteront insensibles aux forces engendrant des dysfonctionnements

La présente invention propose de remplacer le clapet constitué par un siège, une bille d'acier et une grille d'arrêt de la bille, par un clapet constitué d'un siège et d'une membrane à deux positions stables.

L'invention a donc pour objet un clapet de fermeture d'un circuit de gonflage composé d'un siège et d'une membrane semi-rigide ajourée adoptant deux positions stables, conformement à la revendication 1.

Selon une caractéristique, l'une des positions stables interdit la circulation de fluide alors que l'autre position stable autorise la circulation de fluide.

Selon une autre caractéristique, le clapet est actionné par une différence de pression entre l'amont et l'aval du clapet.

Selon une autre caractéristique, la membrane est réalisée polymère (par exemple en caoutchouc ou en latex).

Selon encore une autre caractéristique, la membrane est réalisée par emboutissage d'une tôle métallique.

Selon une autre caractéristique la membrane est réalisée par surmoulage d'un élastomère sur une armature métallique.

Avantageusement, ce clapet est insensible aux forces centrifuges qui résultent de la vitesse de rotation élevée de la roue.

Avantageusement encore, l'utilisation du clapet permet de diminuer le nombre d'éléments de la vanne, ce qui permet une baisse des coûts d'obtention et simplifie la fabrication de la vanne.

Un autre avantage réside dans le fait que ce clapet permet, en plus des fonctions initiales de la vanne, d'effectuer un dégonflage lent du pneumatique.

D'autres caractéristiques, détails et avantages de l'invention ressortiront plus clairement de la description donnée ci-après à titre indicatif en relation avec des dessins parmi lesquels :

- la figure la représente une vue de dessus de la membrane bi-stable,
- la figure 1b représente une coupe, suivant le plan AA', de la membrane bi-stable dans son premier état stable,
- la figure 1c représente une coupe, suivant le plan AA', de la membrane bi-stable dans son deuxième état stable,
- la figure 1d représente une coupe, suivant le plan AA', d'une membrane bi-stable comportant une armature,
- la figure 2a représente une coupe, du clapet à membrane bi-stable dans son premier état stable,
- la figure 2b représente une coupe, du clapet à membrane bi-stable dans son deuxième état stable,
- Les figures 3a à 3c sont des coupes, à une échelle différente d'une vanne de gonflage/dégonflage illustrant l'utilisation de l'invention.

Le clapet proposé par la présente invention est donc composé d'un siège et d'une membrane bi-stable ajourée. Ce clapet est destiné à s'insérer dans une vanne de gonflage et de dégonflage telle que celle décrite dans le brevet FR-95.03299.

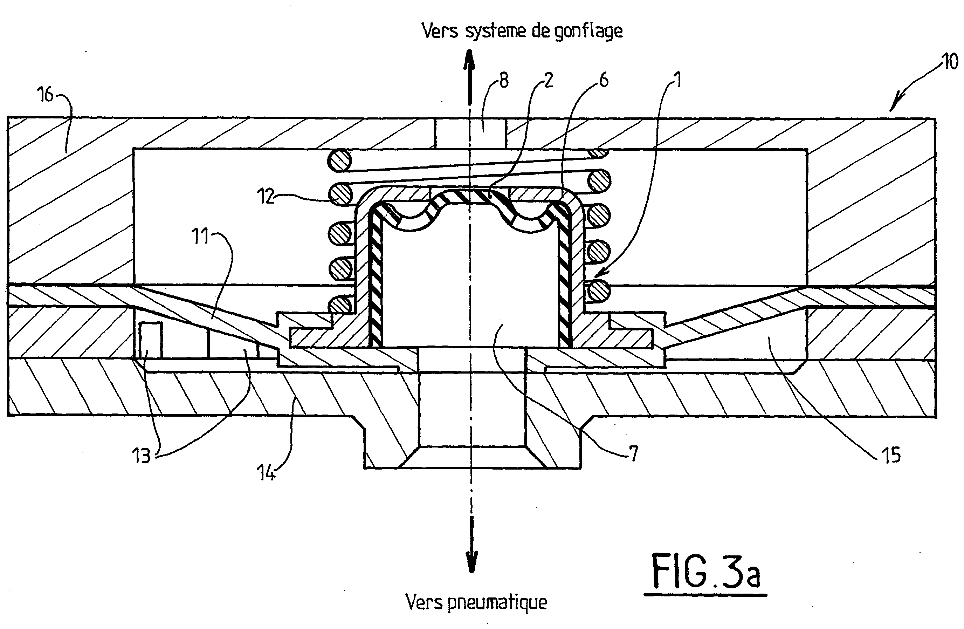

La figure 3a représente une vanne 10 de gonflage et de dégonflage, qui est constituée d'un clapet 1, d'un ressort 12, d'une membrane de vanne 11, d'un socle 14 et d'un chapeau 16. Par l'intermédiaire de l'alésage dans le socle 14, la vanne 10 est reliée à un pneumatique non représenté sur la figure. Par l'alésage effectué dans le chapeau 16, la chambre 8 de la vanne 10 est reliée à un système générateur de pression/dépression non-représenté sur cette figure. La chambre 15 délimitée par la membrane 11 de vanne et le socle 14 communique avec l'extérieur par l'intermédiaire des lumières 13. Le clapet 1 utilisé est, selon l'invention, constitué d'un siège 6 et d'une membrane bi-stable 2.

Les fonctionnements de la vanne et du système de pression étant déjà décrits dans le brevet cité, il sera aisé de se référer à ce document pour en obtenir une explication détaillée.

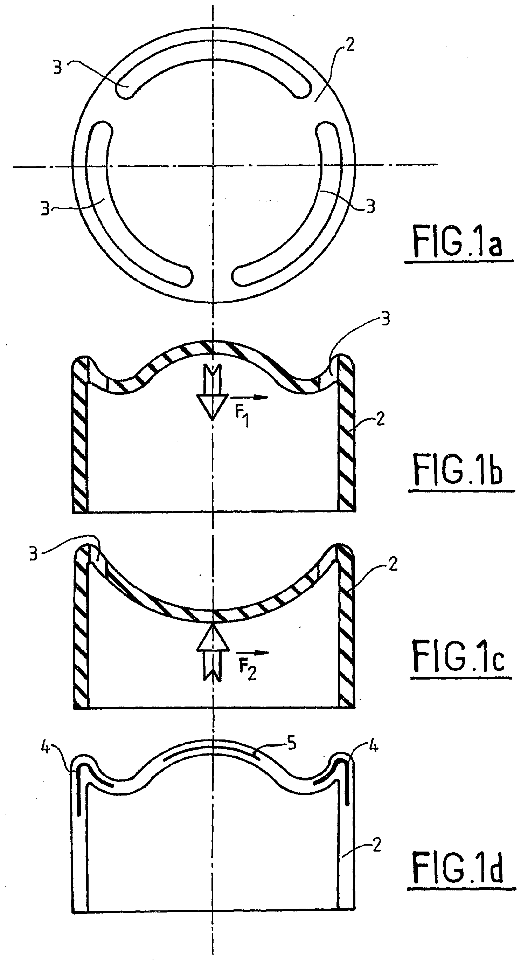

Les figures la à 1d représentent une membrane bi-stable 2 respectivement vue de dessus et vue en coupe suivant le plan AA' dans ses deux positions stables. Cette membrane est un corps de révolution constitué d'une paroi cylindrique et d'un fond ajouré par des ouvertures 3. Le corps peut être en un matériau semi-rigide, par exemple un polymère, une tôle emboutie, ou encore, un polymère surmoulé sur des armatures 4 et 5. On peut également envisager un autre mode de réalisation de ladite membrane si ce mode de réalisation permet à la membrane 2 de présenter deux positions stables. Les figures la à 1c représentent une membrane en polymère semi-rigide et la figure 1d représente une membrane à armatures. Ces armatures 4 et 5 peuvent par exemple être réalisées en métal ou en plastique. Pour faire passer la membrane 2 du premier état stable (fig. 1b) au second état stable (fig. 1c), il faut lui appliquer une force F, orientée vers l'intérieur et supérieure ou égale à $F_1$ la force minimale de transition. Cette force $F_1$ étant fonction du, ou des, matériau(x) constitutif(s), de la forme de la membrane et de la température. Sous l'effet de cette force F, la partie centrale de la membrane 2 se déplace vers l'intérieur de la membrane, passant ainsi d'une position haute à une position basse. Réciproquement, pour faire passer la membrane 2 du second état stable au premier état stable, il faut appliquer une force F', orientée vers l'extérieur et supérieure ou égale à $F_2$ la force minimale de transition.

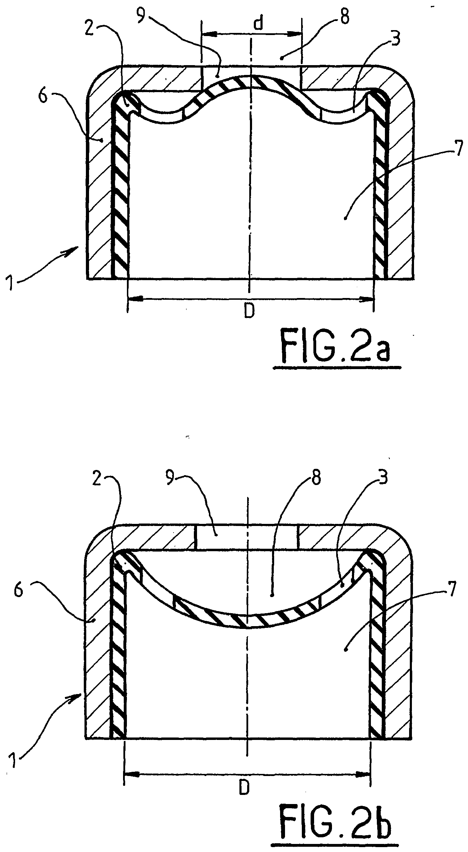

Les figures 2a et 2b représentent le clapet 1, composé de la membrane bi-stable 2 et de son siège 6. Le siège est de révolution et comporte en son centre une ouverture 9 de diamètre d. Lorsque la membrane se trouve dans son premier état stable représenté par la figure 2a, la partie centrale de la membrane vient s'appuyer sur le contour de l'ouverture 9 et assure ainsi une isolation totale entre la chambre 7 à l'intérieur du clapet et l'enceinte 8 située au dessus du clapet. Les ouvertures 3 sont positionnées de manière à ce que, dans ce premier état stable de la membrane, elles ne permettent pas la circulation de fluide entre la chambre 7 et l'enceinte 8. Pour passer du premier état stable au second, il faut appliquer sur la partie supérieure de la membrane la force F supérieure à $F_1$. Cette force est ici réalisée par une différence de pression entre la chambre 7 et l'enceinte 8. La pression minimale permettant changement d'état est :

$$P_8 \geq P_7 + 4*F_1/\Pi d^2$$

Avec $P_7$ la pression régnant dans la chambre 7 et $P_8$ la pression de l'enceinte 8.

Réciproquement, le passage de la membrane du second état stable au premier se fait par écoulement d'un fluide à travers les ouvertures 3, ce qui engendre une différence de pression entre la chambre 7 et l'enceinte 8. La pression maximale de changement d'état est alors :

$$P_8 \leq P_7 - F_2/S$$

S étant la surface de contact de la partie supérieure de la membrane, soumise à la différence de pression entre la chambre 7 et l'enceinte 8.

En considérant que les ouvertures 3 présentent une surface totale s, et que la membrane 2 a un diamètre intérieur D, on peut aisément calculer la valeur de S :

$$S = \Pi D^2/4 - s$$

Les ouvertures 3 seront donc dimensionnées en fonction des caractéristiques techniques de la membrane et de la différence de pression que l'on souhaite obtenir lors de l'écoulement du fluide.

Les figures 3a à 3c illustrent l'incorporation du clapet 1 selon l'invention dans une vanne de gonflage et de dégonflage. La figure 3a représente la vanne en phase de repos, la pression régnant dans la chambre 7 est identique à la pression du pneumatique et la pression dans l'enceinte 8 est sensiblement égale à la pression atmosphérique. Un ressort 12 maintient la membrane de vanne 11 contre son socle 14 et la membrane bi-stable 2 est dans sa position stable obturant le clapet. La vanne est donc totalement étanche. La vanne équipée du clapet 1 selon l'invention présente une structure techniquement très simple, dont le clapet 1 se limite à deux éléments assurant l'ouverture et la fermeture de la vanne. Un tel clapet permet d'améliorer notablement la fiabilité et la stabilité de la vanne.

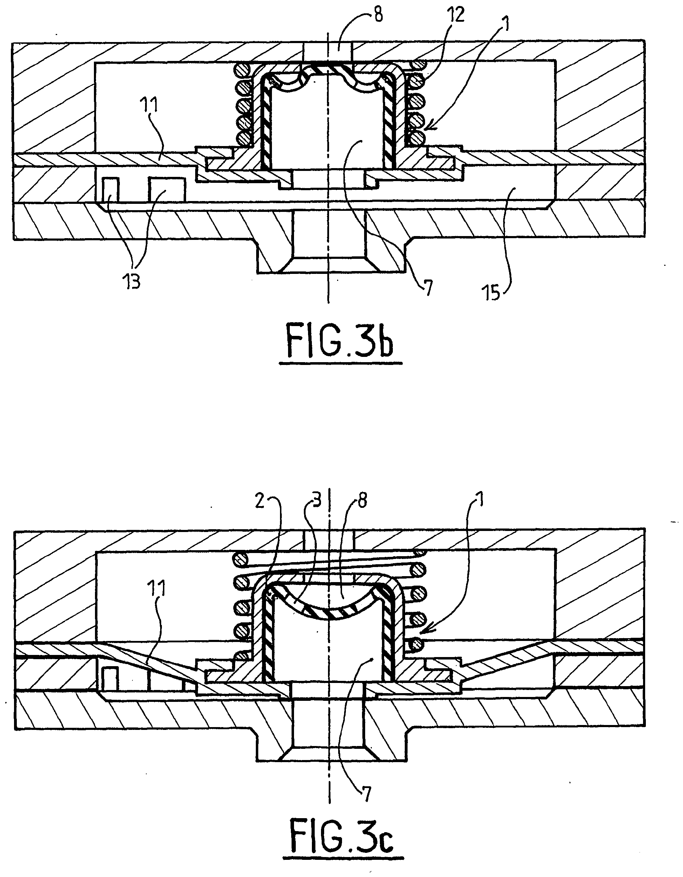

La figure 3b illustre le dégonflage du pneumatique où, comme décrit dans le brevet FR 95-03299, on dépressurise l'enceinte 8 afin que les pressions régnant dans les chambres 7 et 15 soient suffisamment supérieures à celle de l'enceinte 8 pour comprimer le ressort 12. La membrane de vanne 11 se sépare alors de son siège 14 et l'air contenu dans le pneumatique peut s'échapper par les orifices 13. La différence de pression des enceintes 7 et 15 par rapport à l'enceinte 8 maintient la membrane bistable 2 dans sa position d'obturation du clapet.

La figure 3c représente le clapet 1 dans sa deuxième position stable décrite précédemment. Cette position permet d'effectuer deux opérations différentes. Lors du gonflage du pneumatique, on applique dans l'enceinte 8 une pression suffisamment importante ($P_8 \geq P_7 + 4*F_2/\Pi d^2$) pour déclencher le changement de position du clapet. Le fluide peut alors circuler par les ouvertures 3, la pression de l'enceinte 8 étant supérieure à celle de la chambre 7 et le fluide se déplace de l'enceinte 8 vers le pneumatique.

Lorsque le clapet 1 est dans cette deuxième position, on peut effectuer un dégonflage lent. En diminuant progressivement la pression dans l'enceinte 8 de manière à la garder constamment légèrement inférieure à celle de la chambre 7, la différence de pression n'est pas assez importante pour que la membrane 2 change de position et le fluide contenu dans le pneumatique s'échappe vers le système générateur de pression/dépression. Dans cette configuration, le fluide se déplace de la chambre 7 vers l'enceinte 8 et réalise ainsi un dégonflage lent du pneumatique. Pour effectuer le dégonflage lent, il faut réguler la pression $P_8$ de l'enceinte 8, de manière à obtenir :

$$P_7 \geq P_8 \geq P_7 - F_2/S$$

$P_7$ étant la pression régnant dans le pneumatique, donc dans la chambre 7.

Il est également possible de mesurer la pression régnant dans le pneumatique lorsque le clapet est dans cette deuxième position stable. En stabilisant $P_8$ de manière à ce que le flux de fluide à travers le clapet 1 soit nul, $P_8$ et $P_7$ sont identiques, le clapet reste ouvert et on peut effectuer une mesure de la pression régnant à l'intérieur du pneumatique en utilisant un capteur de pression présent dans le système de régulation de pression.

Pour revenir à la première position stable du clapet, il suffit de faire chuter la pression (par exemple en ouvrant le circuit d'alimentation de l'enceinte 8 sur l'extérieur) de manière façon à obtenir la relation suivante:

$$P8 < P_7 - F_2/S$$

Le clapet se referme et redevient étanche.

## Revendications

1. Clapet de fermeture d'un circuit de contrôle actif de la pression d'un pneumatique d'une roue d'un véhicule destiné à assurer le gonflage et le dégonflage dudit pneumatique, **caractérisé en ce qu'**il est constitué d'un siège de révolution (6) comportant en son centre une ouverture circulaire, et d'une membrane bi-stable semi-rigide (2) ajourée par des ouvertures (3) et comportant des moyens lui permettant d'adopter successivement deux positions stables, une première position stable dans laquelle la partie centrale de la membrane vient s'appuyer sur le contour de l'ouverture circulaire (9) et empêche le passage d'un fluide et une deuxième position stable dans laquelle la membrane autorise la circulation d'un fluide, le passage d'une position à l'autre position étant obtenu par une différence de pression de part et d'autre de la membrane (2).

2. Clapet de fermeture d'un circuit de contrôle actif de la pression d'un pneumatique selon la revendication 1, **caractérisé en ce que** la membrane bi-stable (2) est ajourée de façon à réaliser une différence de pression de part et d'autre du clapet (1) lors de l'écoulement d'un fluide.

3. Clapet de fermeture d'un circuit de contrôle actif de la pression du pneumatique de la roue du véhicule selon la revendication 2, **caractérisé en ce que** la membrane bi-stable (2) est réalisée en polymère.

4. Clapet de fermeture d'un circuit de contrôle actif de la pression du pneumatique de la roue du véhicule selon la revendication 2, **caractérisé en ce que** la membrane bi-stable (2) est réalisée par emboutissage d'une tôle métallique.

5. Clapet de fermeture d'un circuit de contrôle actif de la pression du pneumatique de la roue du véhicule selon la revendication 2, **caractérisé en ce que** la membrane bi-stable (2) est réalisée par surmoulage d'un élastomère sur une armature métallique (4 et 5).

6. Application du clapet de fermeture d'un circuit de contrôle actif de la pression du pneumatique de la roue du véhicule selon l'une quelconque des revendications précédentes, dans laquelle on inclut le clapet (1) dans une vanne (10) de gonflage et de dégonflage.

## Patentansprüche

1. Ventil zum Schließen eines Kreises zur aktiven Regelung des Drucks eines Reifens eines Rads eines Fahrzeuges, welches dafür vorgesehen ist, das Aufblasen und Luftablassen des genannten Reifens zu gewährleisten, **dadurch gekennzeichnet, dass** es aus einem umdrehungen Drehsitz (6), welcher in seinem Zentrum eine kreisförmige Öffnung (9) umfasst, und einer bistabilen, halbstarren Membran (2) besteht, welche von Öffnungen (3) durchbrochen ist und Mittel aufweist, welche es ihr ermöglichen, nacheinander zwei stabile Stellungen einzunehmen, eine erste stabile Stellung, in welcher der zentrale Abschnitt der Membran sich an der Kontur der kreisförmigen Öffnung (9) abstützt und den Durchlass eines Fluids verhindert, und eine zweite stabile Stellung, in welcher die Membran die Zirkulation eines Fluids zulässt, wobei der Übergang von einer Stellung in die andere durch eine Druckdifferenz beiderseits der Membran (2) erzielt wird.

**2.** Ventil zum Schließen eines Kreises zur aktiven Regelung des Drucks eines Reifens nach Anspruch 1, **dadurch gekennzeichnet, dass** die bistabile Membran (2) durchbrochen ist, um eine Druckdifferenz beiderseits des Ventils (1) bei der Strömung eines Fluids zu erzielen.

**3.** Ventil zum Schließen eines Kreises zur aktiven Regelung des Drucks des Reifens des Rads des Fahrzeuges nach Anspruch 2, **dadurch gekennzeichnet, dass** die bistabile Membran (2) aus Polymer hergestellt ist.

**4.** Ventil zum Schließen eines Kreises zur aktiven Regelung des Drucks des Reifens des Rads des Fahrzeuges nach Anspruch 2, **dadurch gekennzeichnet, dass** die bistabile Membran (2) durch Tiefziehen eines Metallblechs hergestellt ist.

**5.** Ventil zum Schließen eines Kreises zur aktiven Regelung des Drucks des Reifens des Rads des Fahrzeuges nach Anspruch 2, **dadurch gekennzeichnet, dass** die bistabile Membran (2) durch Abformen eines Elastomers auf einer metallischen Bewährung (4 und 5) hergestellt ist.

**6.** Verwendung des Ventils zum Schließen eines Kreises zur aktiven Regelung des Drucks des Reifens des Rads des Fahrzeuges nach irgendeinem der vorhergehenden Ansprüche, bei welcher das Ventil (1) in ein Aufblas- und Luftablassventil (10) einbezogen wird.

**Claims**

**1.** A valve to close an active control circuit for the pressure of a tyre of a motor vehicle wheel intended to ensure the inflation and deflation of said tyre, **characterised in that** it is composed of a revolution seat (6) provided in its centre with a circular opening (9) and with a bistable semi-rigid membrane (2) with several openings (3) and incorporating means to enable to successively adopt two stable positions, a first stable position in which the central part of the membrane come in contact with the periphery of the circular opening (9) and prevents the circulation of fluid and a second stable position in which the membrane allows the circulation of fluid, the passage from one position to the another position is realised by a different pressure on either side of the membrane (2).

**2.** A valve to close an active control circuit for the pressure of a tyre according to Claim 1, wherein the bistable membrane (2) is openwork so as to create a difference in pressure on either side of the valve (1) during the circulation of a fluid.

**3.** A valve to close an active control circuit for the pressure of a tyre of a motor vehicle wheel according to Claim 2, wherein the bistable membrane (2) is made of a polymer.

**4.** A valve to close an active control circuit for the pressure of the tyre of a motor vehicle wheel according to Claim 2, wherein the bistable membrane (2) is made by stamping a metal sheet.

**5.** A valve to close an active control circuit for the pressure of the tyre of a motor vehicle wheel according to Claim 2, wherein the bistable membrane (2) is made by duplicate moulding an elastomer onto a metallic core grid (4 and 5).

**6.** Application of the valve to close an active control circuit for the pressure of the tyre of a motor vehicle wheel according to any one of the above Claims, wherein the valve (1) is integrated into an inflation and deflation valve (10).

FIG.1a

FIG.1b

FIG.1c

FIG.1d

FIG.2a

FIG.2b

Vers systeme de gonflage

Vers pneumatique

FIG.3a

FIG.3b

FIG.3c

**EP 1 518 067 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 8707772
- FR 9012858
- FR 9503299
- US 6345649 B1